# EUROPEAN PATENT APPLICATION

(11) **EP 2 921 709 A1**
(43) Date of publication of application: **23.09.2015**
(21) Application number: 15159881.0
(22) Date of filing: 19.03.2015
(51) Int. Cl.: F04D 29/057, F16C 17/02, F04D 29/66, F04D 17/12, F04D 29/58

(54) **Turbo type fluid machine**

(30) Priority: 19.03.2014 JP 2014056806
(71) Applicant: KABUSHIKI KAISHA TOYOTA JIDOSHOKKI, Kariya-shi, Aichi-ken 448-8671 (JP)
(72) Inventor: Fujii, Toshiro, Aichi-ken, 448-8671 (JP); Kurita, Hajime, Aichi-ken, 448-8671 (JP); Hoshino, Nobuaki, Aichi-ken, 448-8671 (JP); Yokoi, Hironao, Aichi-ken, 448-8671 (JP)
(74) Representative: Hoffmann Eitle

(57) **Abstract**

A turbo type compressor 100 of the present invention comprises a housing 1, a rotating shaft 3, and first and second impellers 7 and 9. The rotating shaft 3 is supported by the housing 1 to be rotatable around a rotational axis O. A cylinder portion 3c is provided on the rear end side of the rotating shaft 3. The rotating shaft 3 is supported by a first radial foil bearing 57 provided on the radially outer circumference of the cylinder portion 3c and a second radial foil bearing 59 provided on the radially inner circumference of the cylinder portion 3c.

## Description

### TECHNICAL FIELD

The present invention relates to a turbo type fluid machine.

### BACKGROUND ART

Japanese Patent Application Laid-Open No. 2009-257165 discloses a conventional turbo type fluid machine. The turbo type fluid machine includes a rotating shaft supported by a housing to be rotatable around a rotational axis and an impeller coupled to the rotating shaft. In the turbo type fluid machine, fluid is discharged by rotation of the impeller. The rotating shaft is supported by two radial foil bearings provided in the front and the rear in a rotational axis direction.

The radial foil bearings include top foils located on the outer circumference side of the rotating shaft and bump foils located on the outer circumference sides of the top foils and capable of elastically supporting the top foils.

In the radial foil bearings, when the rotational speed of the rotating shaft is low, the outer circumferential surface of the rotating shaft and the top foils slide with each other. On the other hand, when the rotational speed of the rotating shaft increases, since the dynamic pressure of the fluid acts between the outer circumferential surface of the rotating shaft and the top foils, the outer circumferential surface of the rotating shaft and the top foils change into a noncontact state in the radial direction. The rotating shaft rotates at a low coefficient of friction in the radial direction. Therefore, the turbo type fluid machine achieves high power performance. A wear of rotating shaft and the like are less in the radial direction. Therefore, the turbo type fluid machine achieves high durability.

However, when the turbo type fluid machine explained above is mounted on, for example, a vehicle, it is likely that the rotating shaft is swung by vibration or the like and the dynamic pressure is less effective on the radial foil bearings. In this case, the outer circumferential surface of the rotating shaft may be brought into contact with the radial foil bearings, and not only noise and vibration may occur in the radial foil bearings and the rotating shaft but also the wear may occur to spoil durability.

Therefore, in order to increase a load capacity of the radial foil bearings by increasing the area of a portion where the dynamic pressure occurs, the lengths in the rotational axis direction of the rotating shaft and the radial foil bearings may be increased or the radiuses thereof may be increased, which, however, increases the size of the turbo type fluid machine. In this case, for example, mounting performance on a vehicle or the like is spoiled.

The present invention has been devised in view of the conventional circumstances, and it is an object of the invention to provide a turbo type fluid machine that less easily causes noise and vibration and is capable of achieving excellent durability while realizing a reduction in size.

### SUMMARY OF THE INVENTION

A turbo type fluid machine of the present invention is a turbo type fluid machine comprising: a rotating shaft supported by a housing to be rotatable around a rotational axis; and an impeller coupled to the rotating shaft. The turbo type fluid machine discharges fluid along with rotation of the impeller. The rotating shaft includes a cylinder portion. The rotating shaft is supported by a first radial foil bearing provided on the radially outer circumference of the cylinder portion and a second radial foil bearing provided on the radially inner circumference of the cylinder portion.

Other aspects and advantages of the present invention will be apparent from the embodiments disclosed in the following description and the attached drawings, the illustrations exemplified in the drawings, and the concept of the invention disclosed in the entire description and drawings.

### BRIEF DESCRIPTION OF THE DRAWINGS

FIG. 1 is a sectional view of a turbo type compressor in an embodiment 1.
FIG. 2 is an A-A sectional view of FIG. 1, according to the turbo type compressor in the embodiment 1.
FIG. 3 is a B-B sectional view of FIG. 1, according to the turbo type compressor in the embodiment 1.
FIG. 4 is a schematic diagram showing a control mechanism, according to the turbo type compressor in the embodiment 1.
FIG. 5 is a sectional view of a turbo type compressor in an embodiment 2.
FIG. 6 is a B-B sectional view of FIG. 1 of the turbo type compressor in which a first radial foil including three keys and a second radial foil including two keys are provided, according to the turbo type compressor in the embodiment 3.

### DETAILED DESCRIPTION OF EXEMPLARY EMBODIMENTS

Embodiments 1 to 3 embodying the present invention are explained below with reference to the drawings.

### (Embodiment 1)

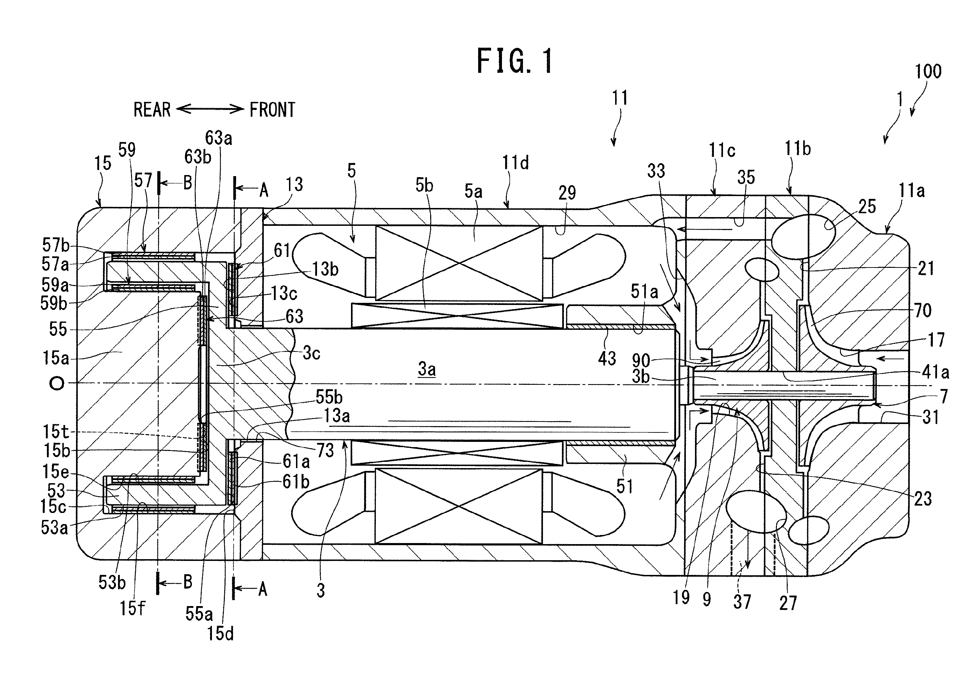

As shown in FIG. 1, a turbo type compressor 100, which is a turbo type fluid machine, includes a housing 1, a rotating shaft 3 having a rotational axis O as a center axis, an electric motor 5, a first impeller 7, and a second impeller 9.

The housing 1 includes a front housing 11, an end plate 13, and a rear housing 15.

The front housing 11 includes a first front housing 11a, a second front housing 11b, a third front housing 11c, and a fourth front housing 11d. In the front housing 11, the first front housing 11a, the second front housing 11b, the third front housing 11c, and the fourth front housing 11d are joined in this order from the front end side toward the rear end side. In the front housing 11, first and second impeller chambers 17 and 19, first and second diffusers 21 and 23, first and second discharge chambers 25 and 27, a motor chamber 29, first and second suction ports 31 and 33, an intermediate pressure port 35, and a discharge port 37 are formed. In the second front housing 11b, a first shaft hole 41a extending in the rotational axis O direction is formed.

The first impeller chamber 17 is formed on the front end side of the front housing 11. The first impeller chamber 17 is formed by the first front housing 11a and the second front housing 11b. The first impeller chamber 17 is formed in a circular truncated cone shape curved such that a generatrix approaches the rotational axis O from the rear side toward the front side of the front housing 11.

The second impeller chamber 19 is formed further in the rear than the first impeller chamber 17 in the front housing 11. The second impeller chamber 19 is formed by the second front housing 11b and the third front housing 11c. The second impeller chamber 19 is formed in a circular truncated cone shape curved such that a generatrix approaches the rotational axis O from the front side toward the rear side of the front housing 11. The second impeller chamber 19 is formed in a similar shape smaller than the first impeller chamber 17.

The first diffuser 21 is formed on the front end side of the second front housing 11b and located on the outer circumference side of the first impeller chamber 17. The first diffuser 21 communicates with the first impeller chamber 17 in a part where the inner diameter of the first impeller chamber 17 is the largest.

The second diffuser 23 is formed on the front end side of the third front housing 11c and located on the outer circumference side of the second impeller chamber 19. The second diffuser 23 communicates with the second impeller chamber 19 in a part where the inner diameter of the second impeller chamber 19 is the largest. The second diffuser 23 is formed in a diameter smaller than the first diffuser 21.

The first discharge chamber 25 is formed by the first front housing 11a and the second front housing 11b. The first discharge chamber 25 is located on the outer circumference side of the first diffuser 21 and communicates with the first diffuser 21. The first discharge chamber 25 is an annular space and is formed such that the sectional area thereof gradually enlarges in the rotational axis O direction. The first discharge chamber 25 communicates with the first impeller chamber 17 via the first diffuser 21.

The second discharge chamber 27 is formed by the second front housing 11b and the third front housing 11c. The second discharge chamber 27 is located on the outer circumference side of the second diffuser 23 and communicates with the second diffuser 23. The second discharge chamber 27 is an annular space and is formed such that the sectional area thereof gradually enlarges in the rotational axis O direction. Since the second impeller chamber 19 and the second diffuser 23 are respectively smaller in diameter than the first impeller chamber 17 and the first diffuser 21, the second discharge chamber 27 is located further on the inner circumference side of the front housing 11 than the first discharge chamber 25. The second discharge chamber 27 communicates with the second impeller chamber 19 via the second diffuser 23.

The second discharge chamber 27 communicates with the discharge port 37. The discharge port 37 is formed by the second front housing 11b and the third front housing 11c and radially extends from the second discharge chamber 27. The discharge port 37 causes the second discharge chamber 27 and the outside of the front housing 11 to communicate with each other.

The motor chamber 29 is formed in the fourth front housing 11d. The motor chamber 29 extends in the rotational axis O direction.

In the fourth front housing 11d, a boss 51 is formed on the front end side of the motor chamber 29. The boss 51 extends toward the rear end side of the motor chamber 29 in the rotational axis O direction. A second shaft hole 51a coaxial with the first shaft hole 41a is formed in the boss 51. A third radial foil bearing 43 is provided in the second shaft hole 51a.

The first suction port 31 is formed on the front end side of the first front housing 11a. The first suction port 31 extends in the rotational axis O direction. The front end side of the first suction port 31 opens to the front end surface of the first front housing 11a. The rear end side of the first suction port 31 communicates with the first impeller chamber 17.

The second suction port 33 is formed to extend across the rear end side of the third front housing 11c and the front end side of the fourth front housing 11d. The rear end side of the second suction port 33 communicates with the motor chamber 29 on the front end side of the boss 51. On the other hand, the front end side of the second suction port 33 communicates with the second impeller chamber 19. The second suction port 33 communicates with the second shaft hole 51a. That is, the second suction port 33 causes the motor chamber 29 and the second impeller chamber 19 to communicate with each other.

The intermediate pressure port 35 is formed further on the outer circumference side than the second discharge chamber 27 to extend across the second to fourth front housings 11b, 11c, and 11d in the rotational axis O direction. The front end of the intermediate pressure port 35 communicates with the first discharge chamber 25. The rear end of the intermediate pressure port 35 communicates with the motor chamber 29. That is, the intermediate pressure port 35 causes the first discharge chamber 25 and the motor chamber 29 to communicate with each other in the rotational axis O direction.

The end plate 13 is joined to the rear end of the fourth front housing 11d. That is, the end plate 13 closes the rear end of the motor chamber 29. In the end plate 13, a third shaft hole 13a coaxial with the first and second shaft holes 41a and 51a is formed. A third shaft supporting surface 13b orthogonal to the rotational axis O is formed at the rear end of the end plate 13. A third key groove 13c, which extends in a direction orthogonal to the rotational axis O, is recessed in the third shaft supporting surface 13b.

The rear housing 15 is located in the rear of the housing 1 and jointed to the rear end side of the end plate 13. The rear housing 15 sandwiches the end plate 13 in conjunction with the fourth front housing 11d. The rear housing 15 includes a columnar convex portion 15a extending front from the rear in the rotational axis O direction. A fourth shaft supporting surface 15b orthogonal to the rotational axis O and facing the third shaft supporting surface 13b is formed at the front end of the convex portion 15a. A fourth key groove 15t, which extends in a direction orthogonal to the rotating shaft 3, is recessed in the fourth shaft supporting surface 15b. The rear housing 15 corresponds to a bottomed cylindrical portion.

In the rear housing 15, an annular radial space 15c extending in the rotational axis O direction to surround the outer circumference of the convex portion 15a and a disk-shaped thrust space 15d linked to the front end of the radial space 15c and formed by the rear housing 15 and the end plate 13 are formed. The front end of the radial space 15c and the thrust space 15d communicate with each other.

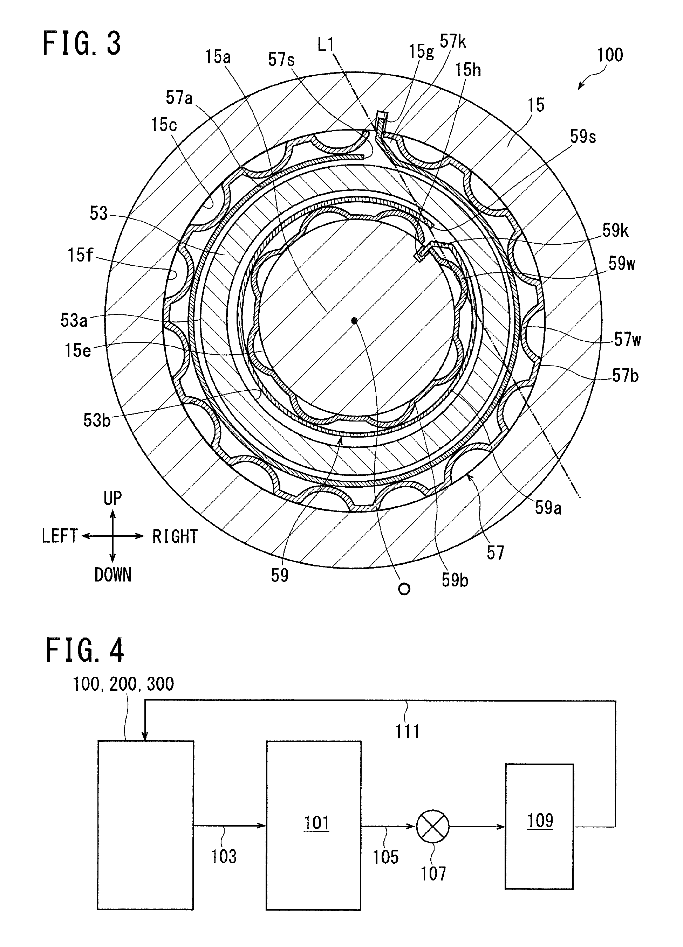

A first shaft supporting surface 15f coaxial with the rotational axis O is formed on the inner circumferential surface of the rear housing 15, that is, the outer circumferential surface of the radial space 15c. A second shaft supporting surface 15e coaxial with the rotational axis O and located further on the rotational axis O side than the first shaft supporting surface 15f is formed on the outer circumferential surface of the convex portion 15a, that is, the inner circumferential surface of the radial space 15c. As shown in FIG. 3, a first key groove 15g, which extends in the rotational axis O direction, is recessed in the first shaft supporting surface 15f. A second key groove 15h, which extends in the rotational axis O direction, is recessed in the second shaft supporting surface 15e.

As shown in FIG. 1, the rotating shaft 3 includes a rotating shaft main body 3a, a small diameter portion 3b integrated with the rotating shaft main body 3a and located on the front end side of the rotating shaft main body 3a, and a cylinder portion 3c located on the rear end side of the rotating shaft main body 3a. The rotating shaft main body 3a is formed in a columnar shape. The small diameter portion 3b is formed in a columnar shape smaller in diameter than the rotating shaft main body 3a.

The rotating shaft 3 is inserted through the housing 1 and supported to be rotatable around the rotational axis O. The front end side of the rotating shaft main body 3a is inserted through the second shaft hole 51a and rotatably supported by the third radial foil bearing 43. On the other hand, the rear end side of the rotating shaft main body 3a is inserted through a third shaft hole 13a. A gap 73, into which a refrigerant serving as fluid can be flowed, is provided between the rotating shaft main body 3a and the third shaft hole 13a. The small diameter portion 3b is inserted through the first shaft hole 41a.

The cylinder portion 3c includes a disk-shaped first supported portion 55 extending from the rear end of the rotating shaft main body 3a in a direction orthogonal to the rotational axis O and a cylindrical second supported portion 53 extending rearward, further apart from the rear end of the rotating shaft main body 3a, from the outer circumferential edge of the first supported portion 55 in parallel with the rotational axis O. The second supported portion 53 and the first supported portion 55 are integrated. The cylinder portion 3c is opened on the rear end side of the second supported portion 53 and is formed in a bottomed cylindrical shape having the first supported portion 55 as a bottom.

The electric motor 5 is provided in the motor chamber 29. The electric motor 5 includes a stator 5a and a rotor 5b. The stator 5a is fixed to the inner wall of the motor chamber 29. The stator 5a is electrically connected to a not-shown battery. The rotor 5b is located on the inner circumference side of the stator 5a. The rotor 5b is fixed to the rotating shaft main body 3a.

The first impeller 7 is press-fit into the front end side of the small diameter portion 3b in the rotating shaft 3 and provided in the first impeller chamber 17. The first impeller 7 is capable of rotating in the first impeller chamber 17 along with the rotation of the rotating shaft 3. The first impeller 7 is formed in a circular truncated cone shape curved such that a generatrix approaches the rotational axis O. In the first impeller 7, a plurality of blades 70 are provided at a predetermined interval. A portion formed in a small diameter of the first impeller 7 is located at the front end of the small diameter portion 3b. A portion formed in a large diameter of the first impeller 7 is located near the motor chamber 29.

The second impeller 9 is press-fit into the rear end side of the small diameter portion 3b in the rotating shaft 3 and provided in the second impeller chamber 19. The second impeller 9 is capable of rotating in the second impeller chamber 19 along with the rotation of the rotating shaft 3. The second impeller 9 is formed in a circular truncated cone shape curved such that a generatrix approaches the rotational axis O. The second impeller 9 is formed in a shape similar to the shape of the first impeller 7. A portion formed in a small diameter of the second impeller 9 is located at the rear end of the small diameter portion 3b. A portion formed in a large diameter of the second impeller 9 is located near the first impeller 7. That is, in the front housing 11, the portion formed in the large diameter of the first impeller 7 and the portion formed in the large diameter of the second impeller 9 are arranged to face each other. In the second impeller 9, a plurality of blades 90 are provided at a predetermined interval.

On the outer circumference side of the second supported portion 53, a first shaft supported surface 53a coaxial with the rotational axis O and facing the first shaft supporting surface 15f is formed. A first radial foil bearing 57 is provided between the first shaft supporting surface 15f and the first shaft supported surface 53a. The first radial foil bearing 57 is installed to the inner circumferential surface of the rear housing 15, that is, the first shaft supporting surface 15f.

The first radial foil bearing 57 includes, as shown in FIG. 3, a first top foil 57a located on the outer circumference side of the first shaft supported surface 53a and displaceable with respect to the first shaft supporting surface 15f and a first bump foil 57b located on the outer circumference side of the first top foil 57a and displaced with respect to the first shaft supporting surface 15f to be capable of elastically supporting the first top foil 57a.

As the first top foil 57a, a metal thin plate is curved in a substantially arc shape. The first top foil 57a includes one gap 57s slenderly extending in the front-rear direction. The first top foil 57a is located on the outer circumference side of the second supported portion 53 and surrounds the first shaft supported surface 53a.

At one end of the first top foil 57a, a first key 57k engaged in the first key groove 15g is formed. The first key 57k is a small piece projecting from the end edge of the first top foil 57a, which forms the gap 57s, in the radial outer direction. The first key 57k engages in the first key groove 15g to thereby stop or prevent rotation of the first top foil 57a in a radial space 15c. The other end of the first top foil 57a is formed as a free end. The first key 57k corresponds to a first rotation stop portion.

As the first bump foil 57b, a metal thin plate, on which a plurality of curved portions 57w are formed, is curved in a substantially arc shape. The first bump foil 57b is elastically deformed to crush the curved portions 57w or is restored to the original shape to thereby be displaced with respect to the first shaft supporting surface 15f to be capable of elastically supporting the first top foil 57a.

On the inner circumference side of the second supported portion 53, a second shaft supported surface 53b coaxial with the rotational axis O and facing the second shaft supporting surface 15e is formed. A second radial foil bearing 59 is provided between the second shaft supporting surface 15e and the second shaft supported surface 53b. The second radial foil bearing 59 is installed to the outer circumferential surface of the convex portion 15a in the rear housing 15, that is, the second shaft supporting surface 15e.

The second radial foil bearing 59 includes a second top foil 59a located on the outer circumference side of the second shaft supporting surface 15e and displaceable with respect to the second shaft supporting surface 15e and a second bump foil 59b located on the inner circumference side of the second top foil 59a and displaced with respect to the second shaft supporting surface 15e to be capable of elastically supporting the second top foil 59a.

As the second top foil 59a, a metal thin plate is curved in a substantially arc shape. The second top foil 59a includes one gap 59s slenderly extending in the front-rear direction. The second top foil 59a is located on the inner circumferential side of the second supported portion 53 and surrounds the second shaft supporting surface 15e.

At one end of the second top foil 59a, a second key 59k engaged in the second key groove 15h is formed. The second key 59k is a small piece projecting from the end edge of the second top foil 59a, which forms the gap 59s, in the radial inner direction. The second key 59k engages in the second key groove 15h to thereby stop of prevent rotation of the second top foil 59a in the radial space 15c. The other end of the second top foil 59a is formed as a free end. The second key 59k corresponds to a second rotation stop portion.

As the second bump foil 59b, a metal thin plate, on which a plurality of curved portions 59w are formed, is curved in a substantially arc shape. The second bump foil 59b is elastically deformed to crush the respective curved portions 59w or restored to the original shape to thereby be displaced with respect to the second shaft supporting surface 15e to be capable of elastically supporting the second top foil 59a.

The first key 57k and the second key 59k shift from each other by about 45° centering on the rotational axis O. Therefore, the first key 57k and the second key 59k and the rotational axis O are respectively arranged such that the rotational axis O does not cross an imaginary straight line L1 that connects the first key 57k and the second key 59k, or is absent on the imaginary straight line L1 that connects the first key 57k and the second key 59k.

As shown in FIG. 1, on the front end side of the first supported portion 55, a third shaft supported surface 55a orthogonal to the rotational axis O and facing the third shaft supporting surface 13b is formed. A first thrust foil bearing 61 is provided between the third shaft supporting surface 13b and the third shaft supported surface 55a. The first thrust foil bearing 61 is installed to the rear end side of the end plate 13, that is, the third shaft supporting surface 13b.

On the rear end side of the first supported portion 55, a fourth shaft supported surface 55b orthogonal to the rotational axis 0 and facing the fourth shaft supporting surface 15b is formed. A second thrust foil bearing 63 is provided between the fourth shaft supporting surface 15b and the fourth shaft supported surface 55b. The second thrust foil bearing 63 is installed to the front end side of the convex portion 15a in the rear housing 15, that is, the fourth shaft supporting surface 15b. The first thrust foil bearing 61 is provided on the one end side of the first supported portion 55, which is the side near the first and second impellers 7 and 9, and the second thrust foil bearing 63 is provided on the other end side of the first supported portion 55.

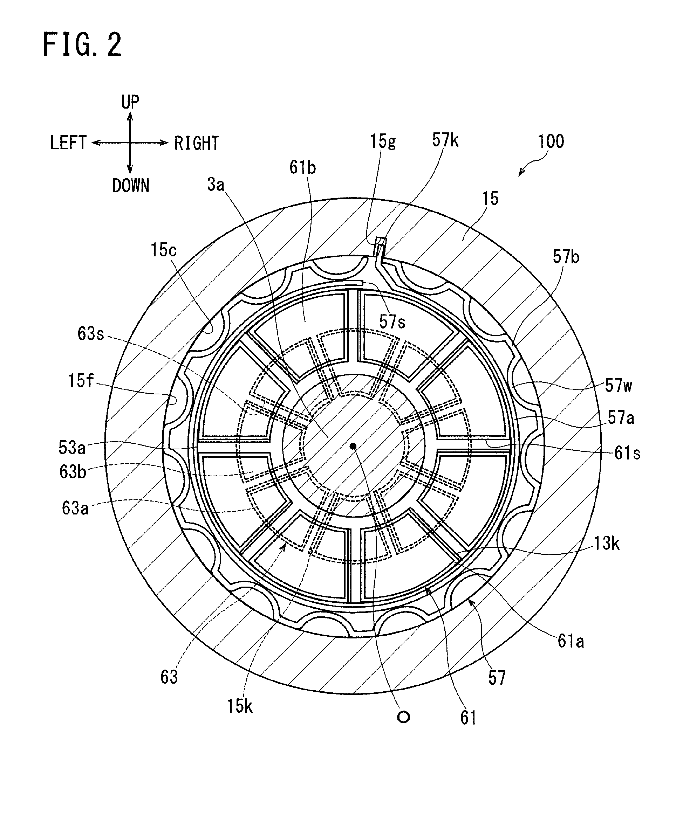

As shown in FIG. 2, the first thrust foil bearing 61 includes eight third top foils 61a located on one end side of the third shaft supported surface 55a and displaceable with respect to the third shaft supporting surface 13b and eight third bump foils 61b located on one end sides of the respective third top foils 61a and displaced with respect to the third shaft supporting surface 13b to be capable of elastically supporting the respective third top foils 61a.

The respective third top foils 61a are made of metal thin plates and arranged radially from the rotational axis O. Gaps 61s in eight places slenderly extending radially from the rotational axis O are provided among the respective third top foils 61a. The respective third top foils 61a are located on the front end side of the third shaft supported surface 55a. In other words, the respective third top foils 61a are located on the rear end side of the third shaft supporting surface 13b.

At one ends of the respective third top foils 61a, as shown in FIG. 1 and FIG. 2, third keys 13k engaged in the third key grooves 13c are formed. The third keys 13k are small pieces projecting from the end edges of the respective third top foils 61a, which form the gaps 61s, toward the end plate 13 in the rotational axis O direction. The respective third keys 13k engage in the respective third key grooves 13c to thereby stop rotation of the respective third top foils 61a in the thrust space 15d. The other ends of the respective third top foils 61a are formed as free ends.

The respective third bump foils 61b are wavy plate-shaped metal thin plates on which a plurality of curved portions are formed. The respective third bump foils 61b are elastically deformed to crush the curved portions or restored to the original shape to thereby be displaced with respect to the respective third shaft supporting surfaces 13b and capable elastically supporting the respective third top foils 61a.

The second thrust foil bearing 63 includes eight fourth top foils 63a located on one end side of the fourth shaft supporting surface 15b and displaceable with respect to the fourth shaft supporting surface 15b and eight fourth bump foils 63b located on the other end side of the fourth top foils 63a and displaced with respect to the fourth shaft supporting surface 15b to be capable of elastically supporting the fourth top foils 63a.

The respective fourth top foils 63a are made of metal thin plates and arranged radially from the rotational axis O. Gaps 63s in eight places slenderly extending radially from the rotational axis O are provided among the respective fourth top foils 63a. The respective fourth top foils 63a are located on the rear end side of the fourth shaft supported surface 55b. In other words, the respective fourth top foils 63a are located on the front end side of the fourth shaft supporting surface 15b.

At one ends of the respective fourth top foils 63a, fourth keys 15k engaged in the fourth key grooves 15t are formed. The fourth keys 15k are small pieces projecting from the end edges of the respective fourth top foils 63a, which form the gaps 63s, toward the convex portion 15a in the rotational axis O direction. The respective fourth keys 15k engage in the respective fourth key grooves 15t to thereby stop rotation of the respective fourth top foils 63a in the thrust space 15d. The other ends of the respective fourth top foils 63a are formed as free ends.

The respective fourth bump foils 63b are wavy plate-shaped metal thin plates on which a plurality of curved portions are formed. The respective fourth bump foils 63b are elastically deformed to crush the curved portions or restored to the original shape to thereby be displaced with respect to the respective fourth shaft supporting surfaces 15b to be capable of elastically supporting the respective fourth top foils 63a.

In the turbo type compressor 100, as shown in FIG. 4, a pipe 103 connected to a condenser 101 is connected to the discharge port 37. The condenser 101 is connected to an evaporator 109 via a pipe 105 and an expansion valve 107. The evaporator 109 is connected to the first suction port 31 through a pipe 111. A refrigeration circuit of an air-conditioning apparatus for a vehicle is configured by the turbo type compressor 100, the evaporator 109, the expansion valve 107, the condenser 101, and the like.

In the turbo type compressor 100 configured as explained above, a driving force for rotating the rotor 5b around the rotational axis O is generated by energization to the stator 5a and the rotating shaft 3 rotates. Consequently, the first impeller 7 rotates in the first impeller chamber 17. The second impeller 9 rotates in the second impeller chamber 19. Therefore, the refrigerant passed through the evaporator 109 is sucked from the first suction port 31 through the pipe 111 and reaches the first impeller chamber 17.

The first impeller 7 rotates in the first impeller chamber 17 to thereby increase kinetic energy of the refrigerant in the first impeller chamber 17. The first impeller 7 converts, through the first diffuser 21, the kinetic energy of the refrigerant into pressure energy to compress the refrigerant and discharges the compressed refrigerant to the first discharge chamber 25. Consequently, the pressure of the refrigerant in the first discharge chamber 25 changes to an intermediate pressure. The refrigerant having the intermediate pressure circulates from the first discharge chamber 25 to the intermediate pressure port 35 and flows into the motor chamber 29 as indicated by a solid line arrow in FIG. 1.

The refrigerant flown into the motor chamber 29 is sucked from the second suction port 33 into the second impeller chamber 19 as indicated by a solid line arrow. In this case, the refrigerant circulating through the second suction port 33 is sucked into the second impeller chamber 19. The second impeller 9 rotates in the second impeller chamber 19 to thereby increase kinetic energy of the refrigerant in the second impeller chamber 19. The second impeller 9 converts, through the second diffuser 23, the kinetic energy of the refrigerant into pressure energy to compress the refrigerant and discharges the refrigerant to the second discharge chamber 27. The refrigerant in the second discharge chamber 27 is discharged from the discharge port 37 to the condenser 101. The refrigerant passes through the expansion valve 107 and the evaporator 109 and is again sucked into the first impeller chamber 17 from the first suction port 31. In this way, cooling of a vehicle interior is performed.

While the cooling is performed, in the turbo type compressor 100, since the refrigerant flown in from the intermediate pressure port 35 is led to the motor chamber 29, it is possible to cool the electric motor 5 that generates heat during actuation.

In the turbo type compressor 100, the refrigerant flowing to the motor chamber 29 passes through the gap 73 and flows into the thrust space 15d. The refrigerant flown into the thrust space 15d can flow into a space between the third shaft supported surface 55a and the third shaft supporting surface 13b, a space between the first shaft supported surface 53a of the radial space 15c and the first shaft supporting surface 15f, a space between the second shaft supported surface 53b and the second shaft supporting surface 15e, and a space between the fourth shaft supported surface 55b and the fourth shaft supporting surface 15b in order.

In the turbo type compressor 100, in FIG. 1 and FIG. 3, when the rotational speed of the rotating shaft 3 is low, the first shaft supported surface 53a and the first radial foil bearing 57 slide with each other and the second shaft supported surface 53b and the second radial foil bearing 59 slide with each other. On the other hand, when the rotational speed of the rotating shaft 3 increases, the dynamic pressure of the refrigerant acts between the first shaft supported surface 53a of the second supported portion 53 in the rotating shaft 3 and the first top foil 57a in the first radial foil bearing 57. The dynamic pressure of the refrigerant also acts between the second shaft supported surface 53b of the second supported portion 53 and the second top foil 59a in the second radial foil bearing 59. With the dynamic pressure, the first and second top foils 57a and 59a displace with respect to the first and second shaft supporting surfaces 15f and 15e. The first and second bump foils 57b and 59b displace with respect to the first and second shaft supporting surface 15f and 15e and elastically support the first and second top foils 57a and 59a. Consequently, the first shaft supported surface 53a and the first top foil 57a separate from each other and the second shaft supported surface 53b and the second top foil 59a separate from each other. That is, the second supported portion 53 of the rotating shaft 3 and the first and second top foils 57a and 59a separate from each other. In this way, the first and second shaft supported surfaces 53a and 53b are supported by the first and second radial foil bearings 57 and 59 in a noncontact state.

In this case, in the turbo type compressor 100, the rotational axis O is absent on the imaginary straight line L1 that connects the first key 57k of the first top foil 57a in the first radial foil bearing 57 and the second key 59k of the second top foil 59a in the second radial foil bearing 59.

Therefore, in the turbo type compressor 100, even if the refrigerant flows out from the gap 57s of the first top foil 57a and the dynamic pressure of the refrigerant is less effective between the first shaft supported surface 53a and the first top foil 57a, the dynamic pressure of the refrigerant acts between the second shaft supported surface 53b and the second top foil 59a located on an imaginary straight line that connects the gap 57s and the rotational axis O. In the turbo type compressor 100, even if the refrigerant flows out from the gap 59s of the second top foil 59a and the dynamic pressure of the refrigerant is less effective between the second shaft supported surface 53b and the second top foil 59a, the dynamic pressure of the refrigerant acts between the first shaft supported surface 53a and the first top foil 57a located on a straight line that connects the gap 59s and the rotational axis O.

Therefore, even if the first shaft supported surface 53a of the second supported portion 53 in the rotating shaft 3 approaches the gap 57s of the first top foil 57a, the second shaft supported surface 53b of the second supported portion 53 hardly approaches the gap 59s of the second top foil 59a.

The rotating shaft 3 rotates at a low coefficient of friction in the radial direction. Therefore, the turbo type compressor 100 achieves high power performance. The wear of the rotating shaft 3 and the like are less in the radial direction. Therefore, the turbo type compressor 100 achieves high durability.

In the turbo type compressor 100, in FIG. 1 and FIG. 2, when the rotational speed of the rotating shaft 3 is low, the third shaft supported surface 55a and the first thrust foil bearing 61 slide with each other and the fourth shaft supported surface 55b and the second thrust foil bearing 63 slide with each other. On the other hand, when the rotational speed of the rotating shaft 3 increases, the dynamic pressure of the refrigerant acts between the third shaft supported surface 55a of the first supported portion 55 in the rotating shaft 3 and the third top foil 61a in the first thrust foil bearing 61. The dynamic pressure of the refrigerant also acts between the fourth shaft supported surface 55b of the first supported portion 55 and the fourth top foil 63a in the second thrust foil bearing 63. With the dynamic pressure, the third and fourth top foils 61a and 63a displace with respect to the third and fourth shaft supporting surfaces 13b and 15b. The third and fourth bump foils 61b and 63b displace with respect to the third and fourth shaft supporting surfaces 13b and 15b and elastically support third and fourth top foils 61a and 63a. Consequently, the third shaft supported surface 55a and the third top foil 61a separate from each other and the fourth shaft supported surface 55b and the fourth top foil 63a separate from each other. That is, the first supported portion 55 of the rotating shaft 3 and the third and fourth top foils 61a and 63a separate from each other. In this way, the third and fourth shaft supported surfaces 55a and 55b are supported by the first and second thrust foil bearings 61 and 63 in a noncontact state.

Further, in the turbo type compressor 100, even if the rotating shaft 3 is swung by vibration or the like, the dynamic pressure acts in each of the first and second radial foil bearings 57 and 59 and the first and second thrust foil bearings 61 and 63. The area of a portion where the dynamic pressure is generated is large compared with the conventional turbo type compressor. That is, load capacities of the first and second radial foil bearings 57 and 59 and the first and second thrust foil bearings 61 and 63 are large.

In particular, in the first and second radial foil bearings 57 and 59, the rotating shaft 3 easily changes to the noncontact state with respect to the first and second shaft supported surfaces 53a and 53b of the second supported portion 53 in the radial direction by the dynamic pressure generated on the inner side and the dynamic pressure generated on the outer side, that is, the dynamic pressure generated on the first shaft supported surface 53a and the dynamic pressure generated on the second shaft supported surface 53b.

Therefore, in the turbo type compressor 100, in the radial direction, noise and vibration are less easily caused on the first and second shaft supporting surfaces 15f and 15e and the first and second shaft supported surfaces 53a and 53b and the wear is less easily caused.

In the turbo type compressor 100, since the second thrust foil bearing 63 is located in the cylinder portion 3c of the rotating shaft 3, it is possible to reduce the length in the rotational axis O direction by at least the thickness of the second thrust foil bearing 63. Therefore, in the turbo type compressor 100, an increase in the size of the housing 1 is suppressed.

Therefore, the turbo type compressor 100 less easily causes noise and vibration and is capable of achieving excellent durability while realizing a reduction in size.

In the turbo type compressor 100, the first radial foil bearing 57 is provided between the first shaft supporting surface 15f and the first shaft supported surface 53a. The second radial foil bearing 59 is provided between the second shaft supporting surface 15e and the second shaft supported surface 53b. In the turbo type compressor 100, since the first and second radial foil bearings 57 and 59 are adopted, management of the gaps formed between the first and second radial foil bearings 57 and 59 and the first and second shaft supported surfaces 53a and 53b is simplified. Therefore, in the turbo type compressor 100, it is easy to install together the first and second radial foil bearings 57 and 59.

In the turbo type compressor 100, the cylinder portion 3c of the rotating shaft 3 is inserted between the first radial foil bearing 57 provided on the radially inner circumference of the rear housing 15 and the second radial foil bearing 59 provided on the radially outer circumference of the convex portion 15a. Therefore, the installation of the cylinder portion 3c can be easy.

### (Embodiment 2)

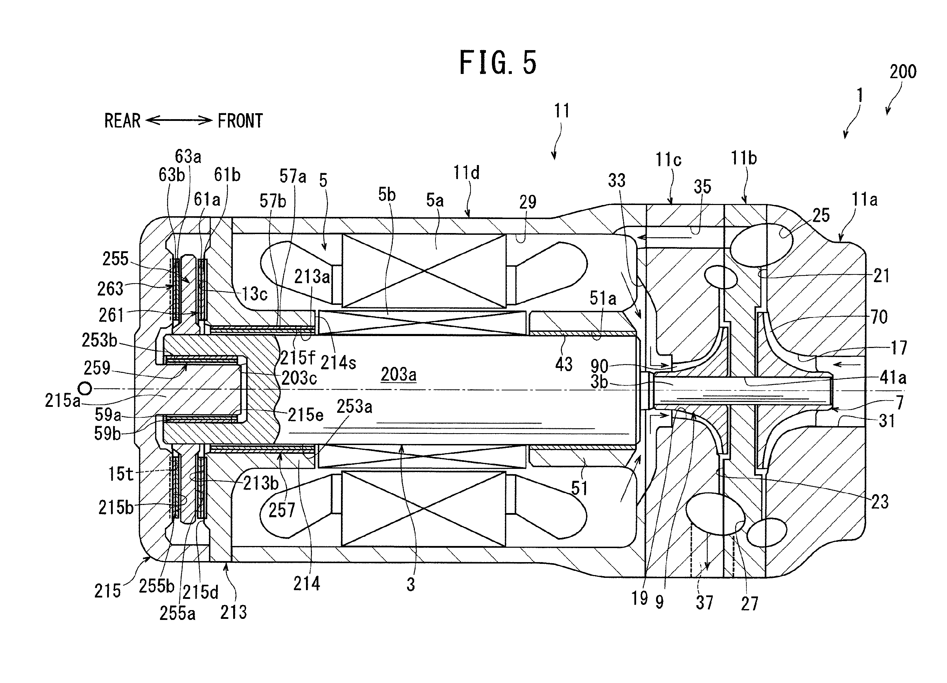

As shown in FIG. 5, in an end plate 213, a boss 214 extending toward the motor chamber 29 in the rotational axis O direction is formed. In the boss 214, a third shaft hole 213a extending in the rotational axis 0 direction is formed. In the third shaft hole 213a, a first shaft supporting surface 215f coaxial with the rotational axis O is formed. A first radial foil bearing 257 is provided on the first shaft supporting surface 215f. A gap 214s is present between the front end side of the boss 214 and the rear end side of the rotor 5b.

On the rear end surface of the end plate 213, an annular third shaft supporting surface 213b capable of supporting a first thrust foil bearing 261 is formed.

In a rear housing 215, an annular thrust space 215d recessed from the front end side toward rearward is formed. On the rear end side of the thrust space 215d, that is, on the front end face in the rear housing 215, an annular fourth shaft supporting surface 215b capable of supporting a second thrust foil bearing 263 is formed.

In the rear housing 215, a disk-shaped supporting plate 255 and first and second thrust foil bearings 261 and 263 are provided. The supporting plate 255 is press-fit into the rear end side of a rotating shaft main body 203a. On the front end side of the supporting plate 255, an annular third shaft supported surface 255a facing the third shaft supporting surface 213b is formed. On the rear end side of the supporting plate 255, an annular fourth shaft supported surface 255b facing the fourth shaft supporting surface 215b is formed. The first thrust foil bearing 261 is provided between the third shaft supporting surface 213b and the third shaft supported surface 255a. The second thrust foil bearing 263 is provided between the fourth shaft supporting surface 215b and the fourth shaft supported surface 255b.

The rear housing 215 includes a columnar convex portion 215a extending frontward from the rear in the rotational axis O direction. On the outer circumferential surface of the convex portion 215a, a second shaft supported surface 253b coaxial with the rotational axis O is formed.

On the outer circumferential surface on the rear end side in the rotating shaft main body 203a, a first shaft supported surface 253a facing the first shaft supporting surface 215f is formed. The first radial foil bearing 257 is provided between the first shaft supporting surface 215f and the first shaft supported surface 253a. In the rotating shaft main body 203a, a recessed portion 203c extending frontward from the rear end is formed. The recessed portion 203c has a cylindrical shape opened on the rear end side and is coaxial with the rotational axis O. The inner diameter of the recessed portion 203c is larger than the diameter of the convex portion 215a. The convex portion 215a is inserted into the recessed portion 203c. On the inner circumferential surface of the recessed portion 203c, a second shaft supporting surface 215e facing the second shaft supported surface 253b is formed. A second radial foil bearing 259 is provided between the second shaft supporting surface 215e and the second shaft supported surface 253b. The other components in a turbo type compressor 200 are the same as the components of the turbo type compressor 100 in the embodiment 1.

In the turbo type compressor 200, a refrigerant flown in from the gap 214s can flow into a space between the first shaft supported surface 253a and the first shaft supporting surface 215f, a space between the third shaft supported surface 255a and the third shaft supporting surface 213b, a space between the fourth shaft supported surface 255b and the fourth shaft supporting surface 215b, and a space between the second shaft supported surface 253b and the second shaft supporting surface 215e in order.

In the turbo type compressor 200, the first radial foil bearing 257 is provided on the first shaft supporting surface 215f. The second radial foil bearing 259 is arranged in the recessed portion 203c, which is the inner side of the first radial foil bearing 257. Therefore, portions where the dynamic pressure is generated in the first radial foil bearing 257 and the second radial foil bearing 259 radially overlap so that shaft length is not extended. The other action and effects in the turbo type compressor 200 are the same as the action and effects of the turbo type compressor 100 in the embodiment 1.

### (Embodiment 3)

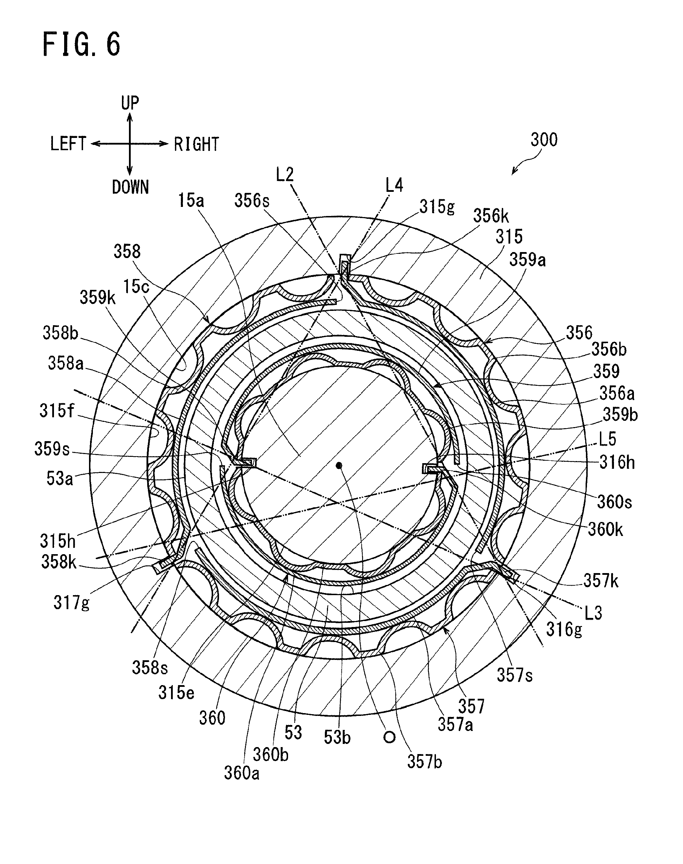

In a turbo type compressor 300 shown in FIG. 6, in a first shaft supporting surface 315f of the rear housing 315, three first key grooves 315g, 316g, and 317g, which extend in the rotational axis O direction, are recessed at equal intervals. The first key groove 315g is located above the first shaft supporting surface 315f. The first key groove 316g is located on the lower right side of the first shaft supporting surface 315f. The first key groove 317g is located on the lower left side of the first shaft supporting surface 315f. In a second shaft supporting surface 315e of the rear housing 315, two second key grooves 315h and 316h, which extend in the rotational axis O direction, are recessed in symmetrical positions centering on the rotational axis O. The second key groove 315h is located on the right side. The second key groove 316h is located on the left side.

Three first radial foil bearings 356, 357, and 358 are provided between the first shaft supporting surface 315f and the first shaft supported surface 53a. The first radial foil bearings 356, 357, and 358 include first top foils 356a, 357a, and 358a and first bump foils 356b, 357b, and 358b. In the first top foils 356a, 357a, and 358a, first keys 356k, 357k, and 358k engaged in the first key grooves 315g, 316g, and 317g are formed. The first keys 356k, 357k, and 358k engage in the first key grooves 315g, 316g, and 317g to thereby stop rotation of the first top foils 356a, 357a, and 358a in the radial space 15c. A gap 356s slenderly extending in the front-rear direction is formed between the other end side of the first top foil 358a and one end side of the first top foil 356a. A gap 357s slenderly extending in the front-rear direction is formed between the other end side of the first top foil 356a and one end side of the first top foil 357a. A gap 358s slenderly extending in the front-rear direction is formed between the other end side of the first top foil 357 and one end side of the first top foil 358a.

Two second radial foil bearings 359 and 360 are provided between the second shaft supporting surface 315e and the second shaft supported surface 53b. The second radial foil bearings 359 and 360 include second top foils 359a and 360a and second bump foils 359b and 360b. In the second top foils 359a and 360a, second keys 359k and 360k engaged in the second key grooves 315h and 316h are formed. The second keys 359k and 360k engage in the second key grooves 315h and 316h to thereby stop rotation of the second top foils 359a and 360a in the radial space 15c. A gap 359s slenderly extending in the front-rear direction is formed between one end side of the second top foil 359a and the other end side of the second top foil 360a. A gap 360s slenderly extending in the front-rear direction is formed between the other end side of the second top foil 359a and one end side of the second top foil 360a.

The first keys 356k, 357k, and 358k and the second keys 359k and 360k shift from each other by about 30° or by about 90° centering on the rotational axis O. Therefore, the first key 356k, the rotational axis O, the second key 360k, and the first key 357k are respectively arranged such that the rotational axis O is absent on an imaginary straight line L2 that connects the first key 356k, the second key 360k, and the first key 357k. The first key 356k, the rotational axis O, the second key 360k, and the first key 357k are also respectively arranged such that the rotational axis 0 is absent on an imaginary straight line L3 that connects the first key 357k and the second key 359k. Further, the first key 356k, the rotational axis O, the second key 360k, and the first key 357k are also respectively arranged such that the rotational axis O is absent on an imaginary straight line L4 that connects the first key 358k, the second key 359k, and the first key 356k. The first key 356k, the rotational axis O, the second key 360k, and the first key 357k are also respectively arranged such that the rotational axis O is absent on an imaginary straight line L5 that connects the first key 358k and the second key 360k. The other components in the turbo type compressor 300 are the same as the components of the turbo type compressor 100 in the embodiment 1.

In the turbo type compressor 300, when the first key 356k and the rotational axis O are connected by an imaginary straight line, the gaps 359s and 360s of the second radial foil bearings 359 and 360 are absent on the imaginary straight line. When the first key 357k and the rotational axis O are connected by an imaginary straight line, the gaps 359s and 360s are absent on the imaginary straight line. Further, when the first key 358k and the rotational axis O are connected by an imaginary straight line, the gaps 359s and 360s are absent on the imaginary straight line. That is, the rotational axis O is absent on the imaginary straight lines L2, L3, L4, and L5 that connect the first keys 356k, 357k, and 358k of the first top foils 356a, 357a, and 358a in the first radial foil bearings 356, 357, and 358 and the second keys 359k and 360k of the second top foils 359a and 360a in the second radial foil bearings 359 and 360.

Therefore, in the turbo type compressor 300, even if the refrigerant flows out from the gaps 356s, 357s, and 358s and the dynamic pressure of the refrigerant is less effective between the first shaft supported surface 53a and the first top foils 356a, 357a, and 358a, the dynamic pressure of the refrigerant acts between the second shaft supported surface 53b and the second top foils 359a and 360a located on extended lines of the imaginary straight lines that connect the gaps 356s, 357s, and 358s and the rotational axis O. In the turbo type compressor 300, even if the refrigerant flows out from the gaps 359s and 360s and the dynamic pressure of the refrigerant is less effective between the second shaft supported surface 53b and the second top foils 359a and 360a, the dynamic pressure of the refrigerant acts between the first shaft supported surface 53a and the first top foils 358a and 359a located on extended lines of the imaginary straight lines that connect the gaps 359s and 360s and the rotational axis O. Therefore, even if the second shaft supported surface 53b of the second supported portion 53 in the rotating shaft 3 approach the gaps 359s and 360s of the second top foils 359a and 360a, the first shaft supported surface 53a of the second supported portion 53 hardly approaches the gaps 356s, 357s, and 358s of the first top foils 356a, 357a, and 358a. The other action and effects in the turbo type compressor 300 are the same as the action and effects of the turbo type compressor 100 in the embodiment 1.

The present invention is explained above according to the embodiments 1 to 3. However, the present invention is not limited to the embodiments 1 to 3. It goes without saying that the present invention can be changed as appropriate and applied without departing from the gist of the present invention.

For example, in the embodiments, the turbo type compressors 100, 200, and 300 have the two stages of the compression phases by the first and second impellers 7 and 9. However, the turbo type compressors 100, 200, and 300 may have one compression process or may have three or more compression phases.

In the embodiments, the present invention can be embodied as a turbo type blower and the like besides the turbo type compressor.

Further, in the embodiments, other shaft supporting surfaces and other shaft supported surfaces may be further provided coaxial with the rotational axis O and on the rotational axis O sides or the outer circumference sides of the first and second shaft supporting surfaces 15f, 215f, 315f, 15e, 215e, and 315e and the first and second shaft supported surfaces 53a, 253a, 53b, and 253b. Other radial foil bearings may be further provided between the shaft supporting surfaces and the shaft supported surfaces.

In the embodiments, the first radial foil bearings 57, 257, 356, 357, and 358 including the one first top foil 57a and the one first bump foil 57b and the three first top foils 356a, 357a, and 358a and the three first bump foils 356b, 357b, and 358b are used. However, the first radial foil bearing may include two first top foils and first bump foils or may include four first top foils and first bump foils. As the second radial foil bearings 59, 259, 359, and 360, second bump foils including three or more second top foils and three or more second bump foils may be used. The first and second thrust foil bearings 61, 261, 63, and 263 including two or more first and second top foils and two or more first and second bump foils may be used.

Further, in the embodiments, the first and second rotation stop portions are not limited to the first and second keys 57k, 356k, 357k, 358k, 59k, 359k, and 360k. Various rotation stop means can be adopted. For example, at least one of the first and second top foils 57a, 356a, 357a, 358a, 59a, 359a, and 360a and the first and second bump foils 57b, 356b, 357b, 358b, 59b, 359b, and 360b may be welded to the first and second shaft supporting surfaces 15f, 215f, 315f, 15e, 215e, and 315e to stop rotation of the first and second radial foil bearings 57, 257, 356, 357, 358, 59, 259, 359, and 360. At least one of the first and second top foils 57a, 356a, 357a, 358a, 59a, 359a, and 360a and the first and second bump foils 57b, 356b, 357b, 358b, 59b, 359b, and 360b may be fit in the first and second shaft supporting surfaces 15f, 215f, 315f, 15e, 215e, and 315e. The same applies to the third and fourth keys 13k and 15k of the first and second thrust foil bearings 61, 261, 63, and 263.

## Claims

1. A turbo type fluid machine comprising:
a rotating shaft supported by a housing to be rotatable around a rotational axis; and
an impeller coupled to the rotating shaft, wherein
the turbo type fluid machine discharges fluid along with rotation of the impeller, wherein
the rotating shaft includes a cylinder portion, and
the rotating shaft is supported by a first radial foil bearing provided on a radially outer circumference of the cylinder portion and a second radial foil bearing provided on a radially inner circumference of the cylinder portion.

2. The turbo type fluid machine according to claim 1, wherein
the first radial foil bearing includes a first top foil and a first bump foil located on a radially outer circumference side of the first top foil and capable of elastically supporting the first top foil,
the first top foil includes, at one end, a first rotation stop portion for preventing the first top foil from rotating with respect to the housing,
the second radial foil bearing includes a second top foil and a second bump foil located on a radially inner circumference side of the second top foil and capable of elastically supporting the second top foil,
the second top foil includes, at one end, a second rotation stop portion for preventing the second top foil from rotating with respect to the housing, and
the rotational axis is arranged such that the rotational axis does not cross an imaginary straight line that connects the first rotation stop portion and the second rotation stop portion.

3. The turbo type fluid machine according to claim 1 or 2 , wherein
the cylinder portion is provided at one end of the rotating shaft,
the housing includes a bottomed cylindrical portion and a convex portion projecting into the cylinder portion from a bottom surface of the bottomed cylindrical portion,
the first radial foil bearing is provided on a radially inner circumference of the bottomed cylindrical portion, and
the second radial foil bearing is provided on a radially outer circumference of the convex portion.

4. The turbo type fluid machine according to claim 3, wherein
the cylinder portion includes a disk-shaped first supported portion extending from one end of the rotating shaft in a direction orthogonal to the rotational axis and a cylindrical second supported portion extending further apart from the one end of the rotating shaft from an outer circumferential edge of the first supported portion in parallel with the rotational axis,
a first thrust foil bearing is provided on a surface of the first supported portion on the side of the rotating shaft, and
a second thrust foil bearing is provided on a surface of the first supported portion on the opposite side of the rotating shaft.
